# EUROPEAN PATENT APPLICATION

(11) **EP 4 245 703 A1**
(43) Date of publication of application: **20.09.2023**
(21) Application number: 23160519.7
(22) Date of filing: 07.03.2023
(51) Int. Cl.: B65G 47/90, B65G 47/91

(54) **LOADING SYSTEM AND METHOD FOR LOADING OBJECTS INDIVIDUALLY ONTO A MAIN CONVEYOR**

(30) Priority: 16.03.2022 NL 2031308
(71) Applicant: AWL-Techniek B.V., 3846 CN Harderwijk (NL)
(72) Inventor: BAHLMAN, Ernst Theodoor, 3846 CN Harderwijk (NL); DRIESSEN, Dennis, 3846 CN Harderwijk (NL); DOUMA, Johannes Willem, 3846 CN Harderwijk (NL); VAN BOXTEL, Johannes Martinus Maria, 3846 CN Harderwijk (NL)
(74) Representative: V.O.

(57) **Abstract**

A loading system for loading objects individually onto a main conveyor, comprising: the main conveyor defining a main conveyor path and configured to receive the objects and to convey the received objects along the main conveyor path; a supply conveyor defining a supply conveyor path and configured to convey objects along the supply conveyor path; and a loading robot configured to transfer objects individually from the supply conveyor to the main conveyor, wherein, when viewed from above, the main conveyor path and the supply conveyor path mutually intersect at a conveyor intersection area where the main conveyor path and the supply conveyor path extend at mutually different vertical levels.

## Description

### FIELD OF THE INVENTION

The invention relates to a loading system for loading objects individually onto a main conveyor, as well as to a method of loading objects individually onto a main conveyor.

### BACKGROUND TO THE INVENTION

Loading systems for loading objects individually onto a main conveyor are known, for example for use in sorting facilities where objects, e.g. in the form of packages, may arrive in bulk and need to be sorted, e.g. according to their respective destinations. To enable automated sorting, the individual objects generally need to be taken from the bulk to be loaded onto a main conveyor in a relatively orderly fashion, for example one after the other so as to form a series of individualized objects along a main conveyor path of the main conveyor. In a known loading system, objects are loaded by pushing them sideways onto the main conveyor from a supply area which is arranged to one lateral side of the main conveyor, or even by manually taking objects from a supply area and placing the objects onto the main conveyor.

There is a need to make sorting facilities more efficient, in particular with respect to the loading of individual objects from a bulk supply.

US2018056335A1 discloses a workpiece sorting system including: a conveyor; a conveying position detection part for workpieces; a camera configured to photograph the workpieces; robots provided with a hand disposed along a conveying direction and capable of ejecting workpieces on the conveyor, and a weight measurement part; a control part configured to control each robot; and a large group classifying part configured to classify the workpieces into large groups allocated to the robots based on an image of the workpieces.

### SUMMARY OF THE INVENTION

An aim of the invention is to provide a loading system for loading objects individually which is more efficient, more reliable, more economical, more versatile, and/or more scalable compared to a known loading system. An aim is to provide a loading system which can efficiently and reliably load a relatively large variety of objects in an automated way. An aim is to at least provide an alternative loading system.

An aspect of the invention provides a loading system for loading objects individually onto a main conveyor. The loading system comprises: the main conveyor defining a main conveyor path and configured to receive the objects and to convey the received objects along the main conveyor path; a supply conveyor defining a supply conveyor path and configured to convey objects along the supply conveyor path; and a loading robot configured to transfer objects individually from the supply conveyor to the main conveyor. When viewed from above, the main conveyor path and the supply conveyor path mutually intersect at a conveyor intersection area, where the main conveyor path and the supply conveyor path extend at mutually different vertical levels.

It has been found that arranging the main conveyor path and the supply conveyor path in this way can improve loading efficiency and reliability in several ways, as well as enabling wider efficiencies in a sorting facility where the loading system may be used.

In particular, such an arrangement of conveyor paths enables a relatively fast and reliable transfer by the loading robot. Compared to known loading systems, an object transfer in a loading system according to the invention can advantageously have a relatively small horizontal component and/or a relatively large vertical component, which is generally more suitable for robotic transferring of objects. In this respect, it is noted that robots, in particular robotic grippers such as suction cups, can generally perform better, e.g. faster and/or more reliably, under vertical loads compared to horizontal loads. Meanwhile, traditional loading systems and methods were primarily designed with human rather than robotic workers in mind. In this sense, it can be said that compared to traditional systems, the loading system according to the invention provides ergonomic improvements for the loading robot as a worker, which in turn enables improvements in efficiency and reliability.

Furthermore, the intersecting conveyor paths greatly improve design flexibility, for example of the overall sorting facility where the loading system may be used. Whereas traditionally a supply conveyor path would terminate at one lateral side of the main conveyor, the supply conveyor path can now continue beyond the main conveyor, for example towards one or more further main conveyors which may be arranged in a similarly intersecting way. At each such intersection, one or more loading robots may be stationed, for example one or more on each side of the respective main conveyor, and/or above the conveyors, e.g. suspended from a ceiling, thus essentially multiplying a loading capacity compared to traditional systems.

It shall be appreciated that in the present context, an object can have various shapes, sizes, materials, etc., for example comprising a box or a bag as a container with one or more various possible items held therein. The container may be labeled, for example visually and/or electronically, in particular for sorting and/or shipping purposes. Although a loading system according to the present invention is particularly useful in the context of package sorting facilities where packages as objects are sorted for shipping purposes, the loading system can be used with similar advantages in other contexts where objects need to be loaded individually, for example in the areas of warehousing, manufacturing, retail, recycling, etc. Thus, objects to be loaded may or may not comprise a container and may or may not be in the form of a package.

In the present context, a conveyor path can be understood as having a main direction along which the conveying takes place as well as optionally having a width transverse to the main direction. Thus, conveyor paths can be understood as intersecting where they mutually overlap when viewed from above. In particular when intersecting, the main directions of the conveyor paths can be mutually different. Packages or other objects being conveyed along a conveyor path need not be constrained to a particular position and/or orientation with respect to the width of the path. This can in particular be the case where the respective conveyor is of a belt type, thus comprising a conveyor belt on which objects can be supported. The supply conveyor and/or the main conveyor may be of such a belt type. Alternatively or additionally, one or more of the conveyors may be of a different type, for example a roller type. In some embodiments, a conveyor such as the supply conveyor and/or the main conveyor may be or comprise a so called automated guided vehicle (AGV). Objects may be supported on a conveyor directly or indirectly, for example being placed on or in an intermediate support structure or container, such as a tray or bin, which may then be conveyed together with the object.

It shall be appreciated that in the present context loading objects individually onto a main conveyor is not necessarily limited to loading those objects sequentially. Instead, the loading of one object may partly or fully overlap in time with the loading of another object, as long as the objects arrive on the main conveyor in an individualized way as opposed to in bulk. So, in some embodiments, a loading robot may lift two or three objects from the supply conveyor simultaneously before releasing them onto the main conveyor, e.g. one by one.

It shall be appreciated that in the present context loading and/or transferring an object onto the main conveyor from the supply conveyor implies that the same object is thereby unloaded from the supply conveyor.

Preferably, the loading robot is configured to transfer the objects at the conveyor intersection area. In this way, the transfer can be along a relatively short path and thus be relatively fast and efficient.

Preferably, the loading robot is arranged at the conveyor intersection area. In this way, the energy expenditure by the loading robot can be relatively low and the robot can be relatively compact.

Preferably, the loading robot is arranged at a side of the main conveyor where the supply conveyor is configured to convey objects towards the main conveyor, for example a side corresponding to a supply area from which the supply conveyor conveys the objects.

Such an arrangement can make the transferring by the loading robot particularly smooth, because the horizontal component of the transferring can thus substantially correspond with the inertia of the object as a result of the conveying by the supply conveyor. Nevertheless, as alluded to elsewhere herein, a loading robot may additionally or alternatively be arranged e.g. at another side of the main conveyor and/or above either or both of the conveyors.

As alluded to above, multiple loading robots may be used, for example at a same conveyor intersection area, for example on opposite sides of the main conveyor and/or on opposite sides of the supply conveyor. In this way, the loading work at the conveyor intersection area can be distributed among the loading robots, enabling further efficiency improvements. In one illustrative example, a first loading robot on one side of the main conveyor may transfer some, e.g. every odd one, of the objects being conveyed by the supply conveyor, while a second loading robot on the other side of the main conveyor may transfer some other, e.g. every even one, of the objects. Since the loading work is distributed, the objects can thus be loaded at a higher rate, wherein for example the supply conveyor and/or the main conveyor can thus be ran at higher conveyor speeds. This illustrates how the intersecting conveyor paths effectively enable higher robotic working capacity at a similar overall foot print, or a smaller foot print at a similar working capacity, as desired.

Optionally, the loading robot is configured to transfer the objects between a first position on a lower one of the main conveyor path and the supply conveyor path and a second position on a higher one of the main conveyor path and the supply conveyor path, wherein the first position is adjacent to where the main conveyor path and the supply conveyor path mutually intersect. The loading robot may be configured to transfer the objects from the first position to the second position. Alternatively, or additionally, the loading robot may be configured to transfer the objects from the second position to the first position. In this way, the objects can advantageously be transferred along a relatively short transfer path which extends mainly vertically. Here, the first position can e.g. be understood as adjacent to where the conveyor paths mutually intersects if its distance thereto is smaller than a level difference between the conveyor paths.

Preferably, to enable a particularly short transfer path, the second position is within where the main conveyor path and the supply conveyor path mutually intersect. Alternatively, the second position may for example be adjacent to where the main conveyor path and the supply conveyor path intersect.

It shall be appreciated that the above comparisons of positions to where the conveyor paths mutually intersect are to be understood as applying to a view from above, thus not as referring to any vertical component of those positions.

As explained above, robots, in particular grippers such as suction cups thereof, tend to perform better when they are mainly loaded vertically. It shall be appreciated that the robot may lift the object from the supply conveyor even when the supply conveyor extends above the main conveyor. In that case, the lifting may be along a lifting distance which at least cancels any friction between the object and the supply conveyor, and optionally allows further objects to pass under the lifted object.

Optionally, the loading robot comprises a motorized arm configured to reach over the supply conveyor and subsequently over the main conveyor for transferring the object from the supply conveyor to the main conveyor. In this way the object can be transferred by a relatively simple robot. The robot can e.g. have a cartesian, cylindric, polar, SCARA or anthropomorphic configuration. The robot can e.g. be configured to only have two degrees of freedom, e.g. one translation and one rotation. The robot can e.g. be configured to perform a linear up-down movement and a pivoting displacement of the arm. The robot can e.g. be configured to only have three degrees of freedom, e.g. two translations and one rotation. The robot can e.g. have a cylindrical robot arm configuration configured to move the end-of-arm in vertical, rotation, and reach. Nevertheless, in some embodiments, the or another motorized arm of the loading robot may be relatively complex, e.g. being fully articulated, so as to provide more versatile handling capabilities.

Preferably, during the transferring, the arm continues to reach over at least one of the conveyors, in particular so as to ensure that the object is always above at least one of the conveyors during the transferring. In this way, if the object should unexpectedly be dropped from the arm during the transferring, the object will generally land on a conveyor where it can be processed further, rather than e.g. on a floor where it may require a human worker to be recovered.

Optionally, the loading robot is configured to pivot the arm about a vertical axis to selectively reach over the supply conveyor or the main conveyor.

Such a pivotal actuation of the arm can be particularly robust and well controlled, while the robot can still be of a relatively simple construction.

Optionally, at the conveyor intersection area, the main conveyor and the supply conveyor are mutually spaced apart vertically, defining a conveyor vertical interspace therebetween. Such an interspace can promote a smooth operation of both conveyors.

Optionally, the conveyor vertical interspace is configured to provide a passage for objects being conveyed through the conveyor intersection area, in particular on a lower one of the supply conveyor and the main conveyor. In this way, objects can advantageously be conveyed along a same conveyor beyond the intersection, for example so that such an object can be transferred from an opposite side of the intersection and/or to a further main conveyor.

Optionally, the mutual intersection among the main conveyor path and the supply conveyor path is at an angle in the range of 20° to 160°, preferably in the range of 45° to 135°, more preferably in the range of 70° to 110°, for example about 90°, when viewed from above.

Optionally, at the conveyor intersection area, the main conveyor extends above the supply conveyor. In this way, the supply conveyor can for example be substantially at ground level, obviating extensive support structures. Meanwhile, the main conveyor can for example be at a level which is convenient for human and/or robotic workers who may need to handle loaded objects downstream.

Alternatively, the main conveyor may extend below the supply conveyor at the conveyor intersection area. Such a configuration may be energetically more advantageous for the loading robot, because the objects may then need to be lifted only slightly before they are lowered onto the main conveyor, aided by gravity acting on the object.

Optionally, when viewed from above: the supply conveyor path extends on either lateral side of the main conveyor path. Optionally, the main conveyor path extends on either lateral side of the supply conveyor path. Alternatively, either conveyor path could extend only to one side, i.e. a conveyor path could substantially end and/or begin at the intersection.

Optionally, the loading robot is configured to lift an individual object from the supply conveyor and to subsequently release the object onto the main conveyor, in particular substantially vertically.

Optionally, the main conveyor is configured for selectively reversing a conveying direction of the main conveyor, in particular compared to a main direction in which correctly loaded objects are normally conveyed, such as for conveying a selected object to a predetermined location, such as an object removal location, e.g. an object removal end of the main conveyor path.

A further aspect provides a sorting facility for sorting objects, for example a package sorting facility for sorting packages, comprising a loading system as described herein and further comprising a sorting system configured to sort objects which have been loaded onto the main conveyor. Such a sorting facility provides above mentioned advantages.

A further aspect provides a method of loading objects, for example packages, individually onto a main conveyor. The method comprises: providing a loading system as described herein; using the supply conveyor, conveying an object, for example a package, to the conveyor intersection area; and using the loading robot, transferring the object from the supply conveyor to the main conveyor. Such a method provides above mentioned advantages.

Optionally, the transferring comprises lifting the object from the supply conveyor and subsequently releasing the object onto the main conveyor, in particular substantially vertically. As explained above, such a method of transferring is particularly suitable for a loading robot.

Optionally, the method further comprises selectively removing the transferred object from the main conveyor after the transferring, in particular in response to a determination by the loading system that the object was loaded incorrectly. In this way, the efficiency and reliability of the loading can be further improved, wherein in particularly it can be avoided that an incorrect loading would affect downstream operations such as sorting. After the removing, the object may e.g. be fed back to the same or a further supply conveyor for a further loading attempt, and/or may be processed further otherwise, e.g. by a human worker.

The removing may for example be by conveying the object using the main conveyor to an object removal end of the main conveyor path. Such an object removal end may be near to where the main conveyor and the supply conveyor mutually intersect, so that such an object removal can be relatively quick. The object may for example be conveyed to such an object removal end by briefly reversing a conveying direction of the main conveyor, in particular compared to a main direction in which correctly loaded objects are normally conveyed. Alternatively, the removing could be realized otherwise and/or elsewhere, e.g. further downstream along the main conveyor.

The determination by the loading system that the object was loaded incorrectly may thus in particular be in view of one or more requirements of downstream operations, which may include sorting operations but also e.g. transportation to and/or from downstream sorting positions. The determining that the object was loaded incorrectly may depend on evaluation, preferably by the loading system, of one or more of the following properties, in particular with respect to one or more associated acceptance or rejection criteria:
- a visibility and/or readability of a label of the object;
- information on a label of the object, in particular regarding a danger associated with the object;
- a size of the object; a shape of the object, in particular in view of a likelihood of the object to unintentionally roll off the main conveyor due to a rounded shape;
- an orientation of the object, e.g. with respect to the main conveyor;
- a position of the object, e.g. with respect to the main conveyor and/or with respect to a dynamically determined area on the main conveyor;
- a singleness of the object, i.e. whether the object is well separated from other objects; and
- a conveyability of the object, e.g. depending on the aforementioned labeling and/or shape.

Such properties may be evaluated by the loading system using one or more suitable sensors, e.g. cameras, in particular in combination with a suitable evaluator such as a computing device configured to carry out the evaluation using data from the sensor and to generate an evaluation result that can be used by the system to determine if the object was loaded correctly or incorrectly.

Additionally or alternatively, the loading system may carry out one or more evaluations of the object while the object is on the supply conveyor. Such evaluations may for example be used in a determination by the system of whether or not the object can be transferred to the main conveyor by the loading robot. Further additionally or alternatively, the loading system may carry out one or more evaluations of the object while the loading robot holds the object, e.g. during transfer from the supply conveyor to the main conveyor. Although useful to ensure smooth loading of objects, such evaluations before the object has actually been loaded onto the main conveyor do not generally provide the aforementioned benefit of avoiding that an incorrect loading of an object would affect downstream operations such as sorting, at least not to the same extent as the earlier described evaluations and determination of correct or incorrect loading of the object, i.e. whether the object has been correctly transferred to the main conveyor.

It will be appreciated that all features and options mentioned in view of the method apply equally to the system, and vice versa. So, for example, the loading system may be configured to selectively remove the transferred object from the main conveyor after the transferring. It will also be clear that any one or more of the above aspects, features and options can be combined.

### BRIEF DESCRIPTION OF THE DRAWING

In the following detailed description, the invention will be explained using exemplary embodiments which are shown in the drawing. The drawing is schematic, thus not necessarily drawn to scale, and merely shows examples. In particular, any absolute dimensions indicated therein are merely exemplary. In the drawing, corresponding elements have been provided with corresponding reference signs. In the drawing,
Fig. 1 shows a top view of a loading system;
Fig. 2 shows a cross sectional view of the loading system of Fig. 1 along the line II-II in Fig. 1; and
Fig. 3 shows a top view of a sorting facility.

### DETAILED DESCRIPTION

The figures show a loading system 1 for loading objects 2, such as packages, individually onto a main conveyor 3. The loading system 1 comprises: the main conveyor 3 defining a main conveyor path P3 and configured to receive the objects 2 and to convey the received objects 2 along the main conveyor path P3; a supply conveyor 4 defining a supply conveyor path P4 and configured to convey objects 2 along the supply conveyor path P4; and a loading robot 5 configured to transfer objects individually from the supply conveyor 4 to the main conveyor 3.

When viewed from above, the main conveyor path P3 and the supply conveyor P4 path mutually intersect at a conveyor intersection area IA, where the main conveyor path P3 and the supply conveyor path P4 extend at mutually different vertical levels.

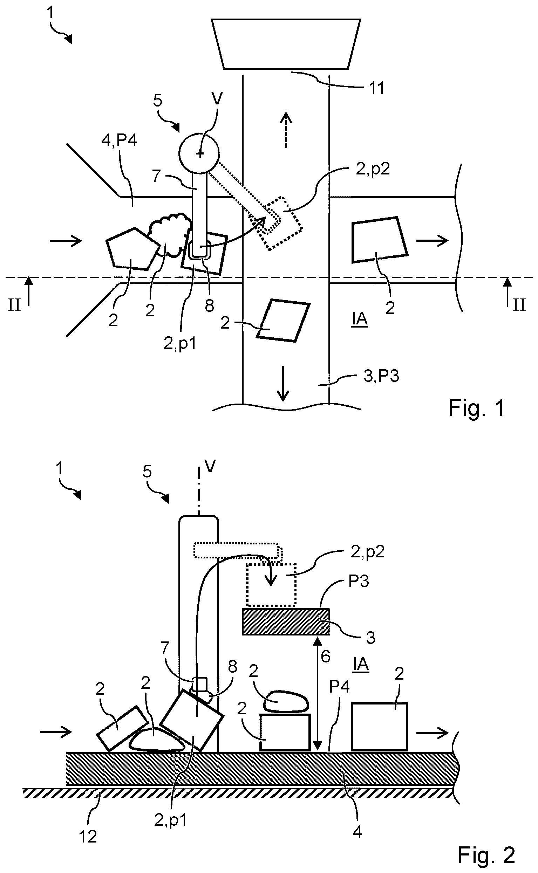

In the figures, the mutual intersection is best seen in the top view of Fig. 1, in which part of the supply conveyor path P4 is obscured by the main conveyor 3 where both paths P3, P4 intersect. Meanwhile the mutually different levels are best seen in the side view of Fig. 2. Here, it can be seen that in this example the supply conveyor 4 is close to a floor 12, while the main conveyor 3 is further away from the floor 12, spaced apart from the supply conveyor 4 by a conveyor vertical interspace 6 which will be explained further elsewhere herein. Thus, in the shown example, at the conveyor intersection area IA, the main conveyor 3 extends above the supply conveyor 4.

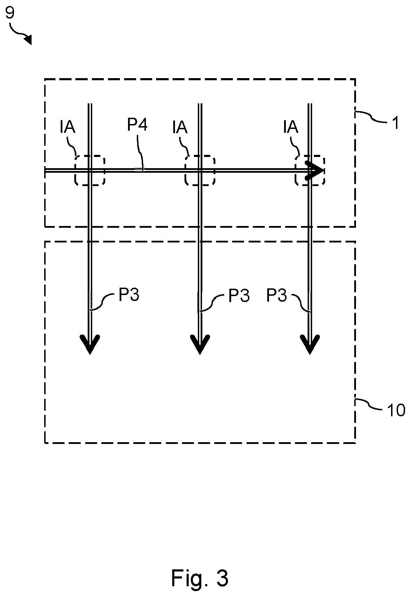

With particular reference to Fig. 3, it will be appreciated that the term conveyor intersection area IA as used herein can be understood e.g. as an area in which conveyor paths such as P3 and P4 intersect, as opposed to possible further areas which are far away from any such intersection.

In the shown example, with reference to Figs. 1 and 2, the loading robot 5 is configured to transfer the objects 2 at the conveyor intersection area IA, and the loading robot 5 is arranged at the conveyor intersection area IA.

Here, the loading robot 5 is configured to transfer the objects 2 between a first position p1, which in the shown example is on the supply conveyor path P4 as the lower of the two paths P3,P4, and a second position p2, which correspondingly is here on the main conveyor path P3. The first position p1 is here adjacent to where the main conveyor path P3 and the supply conveyor path P4 mutually intersect. The second position p2 is here within where the main conveyor path P3 and the supply conveyor path P4 mutually intersect. In Figs. 1 and 2 it can be seen that the second position p2 is here thus straight above both the supply conveyor 4 and the main conveyor 3, while the first position p1 is above the supply conveyor 4 but not above or straight below the main conveyor 3.

Here, at the conveyor intersection area IA, the main conveyor 3 and the supply conveyor 4 are mutually spaced apart vertically, defining an conveyor vertical interspace 6 therebetween.

Here, as can be seen in Fig. 2 the conveyor vertical interspace 6 is configured to provide a passage for objects 2 being conveyed through the conveyor intersection area IA, in particular on a lower one of the conveyors which is here the supply conveyor 4.

Here, the mutual intersection among the main conveyor path P3 and the supply conveyor path P4 is at an angle of about 90°, when viewed from above. It will be appreciated that different angles of intersection are possible, which provides substantial design freedom e.g. when designing a sorting facility 9. For example, an intersection angle of about 90° may be selected if a grid like design is desired, while a different angle may be selected if needed in view of e.g. space constraints.

Here, when viewed from above: the supply conveyor path P4 extends on either lateral side of the main conveyor path P3, and the main conveyor path P3 extends on either lateral side of the supply conveyor path P4.

Here, the loading robot 5 is configured to lift an individual object 2 from the supply conveyor 4 and to subsequently release the object 2 onto the main conveyor 3, in particular substantially vertically.

Here, the loading robot 5 comprises a motorized arm 7 configured to reach over the supply conveyor 4 and subsequently over the main conveyor 3 for transferring the object 2 from the supply conveyor 4 to the main conveyor 3. The motorized arm 7 is here provided with a gripper 8 at its distal end, the gripper 8 being configured to engage, in particular selectively hold or release, an object 2. In an example, the gripper 8 includes one or more suction cups. Alternatively or additionally, the gripper 8 may be configured to engage the object e.g. by form closure, among other options.

Here, the loading robot 5 is configured to pivot the arm 7 about a vertical axis V to selectively reach over the supply conveyor 4 or the main conveyor 3.

Fig. 3 schematically shows an example of a sorting facility 9 for sorting objects 2, comprising a loading system 1 as described herein and further comprising a sorting system 10 configured to sort objects 2 which have been loaded onto the main conveyor 3. In this example, the loading system 1 comprises a single supply conveyor defining a respective supply conveyor path P4 and three main conveyors defining respective main conveyor paths P3. It can be seen that each main conveyor path P3 intersects with the supply conveyor path P4 at a respective conveyor intersection area IA. Each conveyor intersection area IA may be designed according to the example of Figs. 1 and 2, for example. In this way, the loading work can be distributed across multiple loading robots 5 working in parallel. The resulting multiple object flows of the multiple main conveyors 3 could be merged if desired. More generally, it will be appreciated that conveyor paths and associated object flows can be merged or forked, and that the number of supply conveyors and main conveyors can be selected as desired, e.g. as part of an overall design of a sorting facility 9.

The figures also illustrate a method of loading objects 2 individually onto a main conveyor 3, comprising: providing a loading system 1 as described herein; using the supply conveyor 4, conveying an object 2 to the conveyor intersection area IA; and, using the loading robot 5, transferring the object 2 from the supply conveyor 4 to the main conveyor 3.

The transferring preferably comprises lifting the object 2 from the supply conveyor 4 and subsequently releasing the object 2 onto the main conveyor 3, in particular substantially vertically.

The method may further comprise selectively removing a particular transferred object 2 from the main conveyor 3 after the transferring, in particular in response to a determination by the loading system 1 that the object 2 was loaded incorrectly. Such a determination may for example be based on sensor data obtained from a sensor system, in particular a sensor vision system. The removing may for example be performed by conveying the object 2 using the main conveyor 3 to an object removal end 11 of the main conveyor path P3. Thereto, in this example, a conveying direction of the main conveyor 3 can be selectively reversed. as indicated in Fig. 1 by a dashed arrow towards the removal end 11. The object removal end 11 may be arranged to feed the object onto a dedicated removal conveyor (not shown). In case multiple such removal conveyors are provided, e.g. one for each main conveyor path P3, the removal conveyors are preferably merged to convey the objects to one or more combined removal and/or reloading areas.

While the invention has been explained using exemplary embodiments and drawings, these do not limit the scope of the appended claims. For the purpose of clarity and a concise description features are described herein as part of the same or separate embodiments, however, it will be appreciated that the scope of the invention may include embodiments having combinations of all or some of the features described. Many alternatives, variations and extensions are possible as will be readily understood by the skilled person. For example, conveyor paths may be curved, angled, sloped, and/or tilted. A loading robot may have multiple arms and/or multiple grippers, and a robot arm may have multiple articulated joints. A gripper may comprise suction cups and/or one or more other means for engaging an object, for example a jaw or a claw.

In the claims, any reference sign placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The mere fact that certain measures are recited in mutually different claims does not indicate that a combination of these measures cannot be used to an advantage.

### LIST OF REFERENCE SIGNS

- 1.: Loading system
- 2.: Object
- 3.: Main conveyor
- 4.: Supply conveyor
- 5.: Loading robot
- 6.: Conveyor vertical interspace
- 7.: Motorized arm
- 8.: Gripper
- 9.: Sorting facility
- 10.: Sorting system
- 11.: Object removal end
- 12.: Floor
- p1.: First position
- p2.: Second position
- P3.: Main conveyor path
- P4.: Supply conveyor path
- IA.: Conveyor intersection area
- V.: Vertical axis

## Claims

1. A loading system (1) for loading objects (2) individually onto a main conveyor (3), comprising:
- the main conveyor (3) defining a main conveyor path (P3) and configured to receive the objects (2) and to convey the received objects (2) along the main conveyor path (P3);
- a supply conveyor (4) defining a supply conveyor path (P4) and configured to convey objects (2) along the supply conveyor path (P4); and
- a loading robot (5) configured to transfer objects (2) individually from the supply conveyor (4) to the main conveyor (5),
wherein, when viewed from above, the main conveyor path (P3) and the supply conveyor path (P4) mutually intersect at a conveyor intersection area (IA), where the main conveyor path (P3) and the supply conveyor path (P4) extend at mutually different vertical levels.

2. The loading system according to claim 1, wherein the loading robot (5) is configured to transfer the objects (2) at the conveyor intersection area (IA) and/or wherein the loading robot (5) is arranged at the conveyor intersection area (IA),
wherein preferably the loading robot (5) is configured to transfer the objects (2) between a first position (p1) on a lower one of the main conveyor path (P3) and the supply conveyor path (P4) and a second position (p2) on a higher one of the main conveyor path (P3) and the supply conveyor path (P4), wherein the first position (p1) is adjacent to where the main conveyor path (P3) and the supply conveyor path (P4) mutually intersect, wherein preferably the second position (p2) is within where the main conveyor path (P3) and the supply conveyor path (P4) mutually intersect.

3. The loading system according to any of the preceding claims, wherein the loading robot (5) is configured to lift an individual object (2) from the supply conveyor (4) and to subsequently release the object (2) onto the main conveyor (3), in particular substantially vertically.

4. The loading system according to any of the preceding claims, wherein the loading robot (5) comprises a motorized arm (7) configured to reach over the supply conveyor (4) and subsequently over the main conveyor (3) for transferring the object from the supply conveyor (4) to the main conveyor (3),
wherein preferably, during the transferring, the arm (7) continues to reach over at least one of the conveyors (3, 4), in particular so as to ensure that the object (2) is always above at least one of the conveyors (3, 4) during the transferring,
wherein preferably the loading robot (5) is configured to pivot the arm (7) about a vertical axis (V) to selectively reach over the supply conveyor (4) or the main conveyor (3).

5. The loading system according to any of the preceding claims, wherein, at the conveyor intersection area, the main conveyor (3) and the supply conveyor (4) are mutually spaced apart vertically, defining a conveyor vertical interspace therebetween,
wherein preferably the conveyor vertical interspace is configured to provide a passage for objects (2) being conveyed through the conveyor intersection area (IA), in particular on a lower one of the supply conveyor (4) and the main conveyor (3).

6. The loading system according to any of the preceding claims, wherein the mutual intersection among the main conveyor path (P3) and the supply conveyor path (P4) is at an angle in the range of 20° to 160°,
preferably in the range of 45° to 135°, more preferably in the range of 70° to 110°, for example about 90°.

7. The loading system according to any of the preceding claims, wherein, at the conveyor intersection area (IA), the main conveyor (3) extends above the supply conveyor (4),
or wherein, at the conveyor intersection area (IA), the main conveyor (3) extends below the supply conveyor (4).

8. The loading system according to any of the preceding claims, wherein, when viewed from above: the supply conveyor path (P4) extends on either lateral side of the main conveyor path (P3), and/or the main conveyor path (P3) extends on either lateral side of the supply conveyor path (P4).

9. The loading system according to any of the preceding claims, configured to selectively remove the transferred object (2) from the main conveyor (3) after the transferring.

10. The loading system according to any of the preceding claims, in particular according to claim 9, wherein the main conveyor (3) is configured for selectively reversing a conveying direction of the main conveyor (3), in particular compared to a main direction in which correctly loaded objects (2) are normally conveyed, such as for conveying a selected object (2) to a predetermined location, such as an object removal location, e.g. an object removal end (11) of the main conveyor path (P3).

11. A sorting facility (9) for sorting objects, for example a package sorting facility for sorting packages, comprising a loading system (1) according to any of the preceding claims and further comprising a sorting system (10) configured to sort objects (2) which have been loaded onto the main conveyor (3).

12. A method of loading objects (2), for example packages, individually onto a main conveyor (3), comprising:
- providing a loading system (1) according to any of claims 1 - 10, for example as part of a sorting facility (9) according to claim 11;
- using the supply conveyor (4), conveying an object (2) to the conveyor intersection area (IA); and
- using the loading robot (5), transferring the object (2) from the supply conveyor (4) to the main conveyor (3).

13. The method according to claim 12, wherein the transferring comprises lifting the object (2) from the supply conveyor (4) and subsequently releasing the object (2) onto the main conveyor (3), in particular substantially vertically.

14. The method according to claim 12 or 13, further comprising selectively removing the transferred object (2) from the main conveyor (3) after the transferring.

15. The method according to claim 14, wherein the selective removing is in response to a determination by the loading system (1) that the object (2) was loaded incorrectly.
